Europäisches Patentamt

European Patent Office

Office européen des brevets

(19)

(11) Veröffentlichungsnummer : **0 183 930**
**B1**

(12) **EUROPÄISCHE PATENTSCHRIFT**

(45) Veröffentlichungstag der Patentschrift :
**26.04.89**

(21) Anmeldenummer : **85111978.4**

(22) Anmeldetag : **21.09.85**

(51) Int. Cl.⁴ : **F 16 L 58/10, B 29 C 63/10,
B 29 D 23/00, B 05 D 7/14**

(54) **Verfahren zur Herstellung eines Metallrohres mit einer Korrosions- und Stossschutzbeschichtung.**

(30) Priorität : **06.12.84 DE 3444523**

(43) Veröffentlichungstag der Anmeldung :
**11.06.86 Patentblatt 86/24**

(45) Bekanntmachung des Hinweises auf die Patenterteilung : **26.04.89 Patentblatt 89/17**

(84) Benannte Vertragsstaaten :
**AT BE CH DE FR GB IT LI LU NL SE**

(56) Entgegenhaltungen :
**EP–A– 0 026 906
EP–A– 0 054 209
EP–A– 0 054 210
EP–A– 0 112 277
AT–B– 341 200
AT–B– 364 972
DE–A– 3 046 263
DE–A– 3 101 684
DE–A– 3 206 582
DE–A– 3 230 955
DE–B– 1 965 802
DE–B– 2 900 597**

(73) Patentinhaber : **Hoesch Aktiengesellschaft
Eberhardstrasse 12
D-4600 Dortmund 1 (DE)**

(72) Erfinder : **Gross, Heinz, Dipl.-Ing.
Reichsmarkstrasse 142 ·
D-4600 Dortmund 30 (DE)**
Erfinder : **Kroll, Peter
Wilhelm-Busch-Ring 11
D-4708 Kamen-Methler (DE)**
Erfinder : **Welsing, Klaus-Otto, Dipl.-Ing.
Gründer Weg 5
D-5870 Hemer (DE)**

## Beschreibung

Die Erfindung betrifft ein Verfahren zur Herstellung eines Metallrohres mit einer Ummantelung aus einem thermoplastischen Kunststoffband, insbesondere einem Polyäthylenband, wobei zwischen dem Metallrohr und der Ummantelung ein Heißschmelzkleber eingebracht wird.

Aus der DE-B-24 07 427 ist es bekannt, Stahlrohre mit Folien aus Heißschmelzkleber (Äthylencopolymer) und thermoplastischem Kunststoff (Polyäthylen) unter Anwendung einer Anpreßrolle zu ummanteln. Es werden dabei direkt extrudierte Folien verwendet, die also Temperaturen von 180-240 °C aufweisen. Über die Temperatur und den Oberflächenzustand des Stahlrohres ist nichts offenbart. Durch eine spezielle Vorrichtung wird auf die Folien eine Reckspannung aufgebracht, die nur für den Bereich der Schweißnaht reduziert wird.

Es ist weiterhin bekannt, Metallrohre zunächst mit einem unter Vernetzung härtbaren Kunststoffharz wie z. B. Epoxyharz zu beschichten, darüber eine Schmelzkleberschicht, in der Regel Äthylencopolymerisat, und darauf wiederum eine Deckbeschichtung, in der Regel als Folienband oder Extrusionsschlauch aufzubringen (US-A-33 90 704, DE-A-32 30 955, DE-A-29 44 809, DE-C-19 65 802, DE-C-20 20 901). In allen Fällen wird das Metallrohr auf Temperaturen oberhalb 140-316 °C aufgeheizt, um eine Verbindung der Beschichtung zu erreichen.

Aus der DE-B-22 22 911 ist bekannt, Stahlrohre nur auf 70-90 °C Oberflächentemperatur zu erwärmen, sodann mit einer Epoxyharzschicht und einem Doppelschlauch aus direkt extrudiertem Äthylencopolymer und Polyäthylen zu versehen. Die niedrige Temperatur des Stahlrohres soll mit Rücksicht auf eine bereits vorhandene Innenbeschichtung gewählt werden.

Aus der US-A-32 31 443 ist es bekannt, Stahlrohre mit einer Epoxyharzbeschichtung zu versehen, sodann ein mit einem Klebstoff versehenes Polyäthylenband, das auf ca. 35-65 °C angewärmt wird, auf das Stahrohr zu wickeln. Über die Temperatur des Stahlrohres ist keine Aussage gemacht worden.

Als Nachteil haftet allen Verfahren nach dem Stand der Technik an, daß die fertigen Beschichtungen eine hohe Schrumpfspannung aufweisen, gleichgültig, ob das Rohr mit einem Extrusionsschlauch oder einer Wickelfolie ummantelt wurde.

In Versuchen wurde festgestellt, daß sowohl in Rohraxial — als auch in Radialrichtung Dehnungen von 20-70 % normal sind. Unter diesen Spannungen leidet auf Dauer die Haftfestigkeit der Beschichtung auf dem Stahlrohr.

Es ist bekannt, daß Stahlrohrbeschichtungen mit aufgesintertem Polyäthylen derartige Schrumpfspannungen nicht aufweisen. Als Nachteil der Sindertechnik ist jedoch anzuführen, daß die Stahlrohroberfläche auf Temperaturen von 280-300 °C zu erhitzen ist.

Allen Verfahren gemeinsam (Ausnahme US-A-32 31 443) haftet zudem der entscheidende Nachteil an, daß die Erwärmung des Stahlrohres und das Aufbringen der Beschichtung in einem engen zeitlichen Zusammenhang stehen aufgrund der genannten Wärmeführung. für das Stahlrohr und zudem bei der Extrusionsbeschichtung die Durchsatzmenge der Beschichtungsstrecke an die Leistung des Extruders gekoppelt ist.

Von daher ist es Aufgabe der Erfindung, ein Verfahren der eingangs genannten Art zu schaffen, das zum einen eine langlebige festhaftende Korrosionsschutzschicht gewährleistet und zum anderen das Problem der Kopplung der Ausstoßmenge an die Leistung des Kunststoffband-Extruders bzw. des Kleberfolien-Extruders löst.

Diese Aufgabe wird erfindungsgemäß gelöst durch die im Anspruch 1 genannten Merkmale. Vorteilhafte Weiterbildungen der Erfindung sind in den Unteransprüchen erfaßt.

Voraussetzung für eine gute Haftung der Beschichtung ist ein Säubern der Stahloberfläche durch chemische Mittel oder einfach durch Sandstrahlen. Sandstrahlen hat zudem den Vorteil, daß sich dadurch die Stahloberfläche leicht erwärmt. Es wurde festgestellt, daß eine starke Aufheizung der Stahlrohroberfläche nicht erforderlich ist, sondern lediglich eine Erwärmung, die um 5 K oberhalb der Taupunkttemperatur der Umgebungsatmosphäre liegt. Mit dieser Temperaturerhöhung wird in der Regel erreicht, daß die relative Feuchtigkeit der Umgebungsluft der Stahlrohroberfläche unter 85 % sinkt. Dies ist ausreichend, um darauffolgend einen Heißschmelzkleber oder ein härtendes Kunststoffharz aufzubringen, ohne daß die Feuchtigkeit die Haftung zwischen dem Stahlrohr und der Beschichtung stört. Sowohl für den Kleber als auch für das thermoplastische Kunststoffband können vorextrudierte kalte Folien verwendet werden, die in der benötigten Breite und Dicke im Handel erhältlich sind oder auf einem separaten Extruder selbst hergestellt werden können. Durch die erfindungsgemäße Erwärmung auf die genannten Temperaturen wird die in den kalten Folien eingefrorene Spannung gelöst, so daß nach dem Wickeln die fertige Isolierung nahezu spannungsfrei ist. Als Heißschmelzkleber werden sinnvollerweise Copolymere des thermoplastischen Kunststoffes verwendet, der als Deckfolie verwendet werden soll, also z. B. ein Äthylencopolymer als Kleber für ein Kunststoffband aus Polyäthylen oder Vinylcopolymer für ein Kunststoffband aus PVC.

Die Schichtdicken für den Schmelzkleber und das härtbare Kunststoffharz sind erfindungsgemäß derart gewählt, daß eine vollständige, Benetzung der Oberflächen möglich ist, insbesondere unter Berücksichtigung der Anpressung der Folien durch eine Rolle. Die Dicke des thermoplastischen Kunststoffbandes hängt von der Art der Deckbeschichtung ab.

Als vorteilhaft hat sich eine Foliendicke von 0,3-0,5 mm erwiesen, die durch 6-10faches überlapptes Umwickeln auf eine Gesamtschichtstärke der Deckbeschichtung von ca. 2,5-3 mm anwächst. Diese Vielfachumwicklung hat zudem den Vorteil, daß der gleiche Rohrabschnitt mehrfach von der Anpreßrolle überrollt wird und so eine innige Verbindung der Kunststoffschichten erreicht wird.

Anhand eines Ausführungsbeispiels wird die Erfindung im folgenden erläutert :

Ein Stahlrohr von 1.420 mm Ø mit einer Wanddicke von 16 mm wird spiralförmig durch eine Sandstrahlanlage gefördert und dort entzundert, anschließend wird mit Preßluft die Oberfläche nachgesäubert. Das Stahlrohr weist an der Oberfläche eine Temperatur von 20 °C. Die Lufttemperatur in der Halle beträgt 25 °C, die relative Luftfeuchtigkeit 90 %. Die Taupunkttemperatur liegt bei 23 °C ; das Rohr wird auf Temperaturen von mindestens 28 °C erwärmt, bevor eine Heißschmelzkleberfolie auf das Rohr gewickelt wird, Stoß an Stoß. Unmittelbar vor der Berührung mit dem Stahlrohr überstreicht die Heißschmelzkleberfolie aus Äthylencopolymerisat einen Infrarotstrahler, dessen Leistung so eingestellt ist, daß die Folie eine Erwärmung auf 80 °C erhält. Direkt hinter der Wickelstation für die Kleberfolie ist eine weitere Wickelstation für ein vorextrudiertes, kaltes Band aus Polyäthylen angeordnet. Das Polyäthylenband in einer Schichtdicke von 0,4 mm überstreicht ebenfalls einen Infrarotstrahler, dessen Leistung so eingestellt ist, daß das Polyäthylenband auf 130 °C erwärmt wird, und wird dann auf das Stahlrohr gewickelt mit einer Überlappung, so daß durch mehrfaches Umwickeln ein Schichtdicke von insgesamt 2,5 mm entsteht. Bei diesem Prozeß läuft das Stahlrohr spiralförmig an den Wickelstationen vorbei. Über dem Stahlrohr ist eine Anpreßrolle angeordnet, die beide Wickelfolien fest auf die Stahlrohroberfläche drücken.

Mit einer Wasserbrause wird das Rohr anschließend auf Raumtemperatur abgekühlt.

Die kalte Polyäthylen-Deckfolie hat in Querrichtung eine eingefrorene Spannung. Die Querkontraktion beträgt 67 %.

Nach dem Wickeln entnommene Proben des Polyäthylenbandes zeigen sowohl in Längs- als auch in Querrichtung eine Kontraktion von 2 %.

## Patentansprüche

1. Verfahren zur Herstellung eines Metallrohres mit einer Ummantelung aus einem thermoplastischen Kunststoffband, insbesondere einem Polyäthylenband, wobei zwischen dem Metallrohr und der Ummantelung ein Heißschmelzkleber eingebracht wird, mit folgenden Verfahrensschritten :
   a) säubern der Metallrohroberfläche,
   b) erwärmen des Metallrohres auf eine Temperatur, die mindestens 5 K oberhalb der Taupunkttemperatur der Umgebungsatmosphäre liegt,
   c) erwärmen der Heißschmelzkleberfolie auf mindestens 350 K unmittelbar vor Berührung mit dem Metallrohr,
   d) aufbringen der Heißschmelzkleberfolie,
   e) erwärmen des thermoplastischen Kunststoffbandes unmittelbar vor Berührung mit dem mit der Heißschmelzkleberfolie beschichteten Metallrohr auf mindestens 380 K,
   f) Ummantelung des beschichteten Metallrohres mit dem thermoplastischen Kunststoffband
   g) anpressen der Heißschmelzkleberfolie und des thermoplastischen Kunststoffbandes mit einer Rolle,
   h) abkühlen des ummantelten Metallrohres auf Raumtemperatur.

2. Verfahren nach Anspruch 1, dadurch gekennzeichnet, daß zeitlich unmittelbar vor dem Aufbringen der Heißschmelzkleberfolie eine Schicht aus einem unter Vernetzung härtbaren Kunststoffharz auf das Metallrohr aufgebracht wird.

3. Verfahren nach Anspruch 2, dadurch gekennzeichnet, daß die Schichtdicke des härtbaren Kunststoffharzes mindestens 0,005 mm beträgt.

4. Verfahren nach den Ansprüchen 1 bis 3, dadurch gekennzeichnet, daß das härtbare Kunststoffharz aus Epoxyharz des Bisphenol-A-Types besteht und vor Aufbringen der Heißschmelzkleberfolie durch Mikrowellenstrahlung auf Reaktionstemperatur erwärmt wird.

5. Verfahren nach den Ansprüchen 1 bis 4, dadurch gekennzeichnet, daß die Heißschmelzkleberfolie mindestens 0,005 mm dick aufgetragen wird.

6. Verfahren nach den Ansprüchen 1 bis 5, dadurch gekennzeichnet, daß das thermoplastische Kunststoffband eine Dicke von mindestens 0,3 mm aufweist.

7. Verfahren nach einem oder mehreren der vorhergehenden Ansprüche 1 bis 6, dadurch gekennzeichnet, daß die Heißschmelzkleberfolie und das thermoplastische Kunststoffband durch Infrarotstrahlung erwärmt wird.

8. Verfahren nach Anspruch 1 gekennzeichnet durch die Verwendung einer vorextrudierten erkalteten Heißschmelzkleberfolie und eines vorextrudierten erkalteten thermoplastischen Kunststoffbandes.

## Claims

1. Method for the manufacture of a metal tube with a covering of a thermoplastic plastics layer, particularly a polyethylene layer, wherein a hot melt adhesive is applied between the metal tube and the covering, by the following method steps :
   a) cleaning of the metal tube surface,
   b) heating of the metal tube to a temperature which lies at least 5°K above the dew point temperature of the ambient atmosphere,
   c) heating of the hot-melt adhesive sheet to at least 350 °K directly before contact with the metal tube,
   d) application of the hot-melt adhesive sheet,
   e) heating of the thermoplastic plastics strip directly before contact with the metal tube covered with the hot-melt adhesive sheet at least 380 °K,

f) covering of the coated metal tube with the thermoplastic plastics strip,

g) application of the hot-melt adhesive sheet and the thermoplastic plastics strip with a roller,

h) cooling of the covered metal tube to room temperature.

2. Method according to claim 1, characterised in that, directly before application of the hot-melt adhesive sheet, a layer of a plastics resin hardenable by cross-linking is applied to the metal tube.

3. Method according to claim 2, characterised in that the layer thickness of the hardenable plastics resin amounts to at least 0.005 mm.

4. Method according to claims 1 to 3, characterised in that the hardenable plastics resin consists of a epoxy resin of the bisphenol-A-type and before application of the hot-melt adhesive sheet is heated by microwave radiation to the reaction temperature.

5. Method according to claims 1 to 4, characterised in that the hot-melt adhesive sheet has a thickness amounting to at least 0.005 mm.

6. Method according to claims 1 to 5, characterised in that the thermoplastic plastics strip has a thickness of at least 0.03 mm.

7. Method according to one or more of the preceding claims 1 to 8, characterised in that the hot-melt adhesive sheet and the thermoplastic plastics strip are heated by infra-red radiation.

8. Method according to claim 1 characterised by the use of a pre-extruded cold hot-melt adhesive sheet and a pre-extruded cold thermoplastic plastics layer.


**Revendications**

1. Procédé pour la fabrication d'un tuyau métallique avec une enveloppe extérieure en bande de matière synthétique thermoplastique, en particulier une bande de polyéthylène, une colle à fusion étant disposée entre le tuyau métallique et l'enveloppe extérieure, comprenant les étapes de fabrication suivantes :

a) Nettoyage de la surface du tuyau métallique.

b) Chauffage du tuyau métallique à une température qui est située au moins 5 °K au-dessus du point de rosée de l'atmosphère ambiante.

c) Chauffage de la feuille de colle à fusion à au moins 350° K immédiatement avant le contact avec le tuyau métallique.

d) Application de la feuille de colle à fusion.

e) Chauffage de la bande de matière synthétique thermoplastique à au moins 380 °K immédiatement avant le contact avec le tuyau métallique revêtu de la feuille de colle à fusion.

f) Gainage du tuyau métallique revêtu avec la bande thermoplastique.

g) Pressage de la feuille de colle à fusion et de la bande de matière synthétique thermoplastique au moyen d'un rouleau.

h) Refroidissement du tuyau métallique enveloppé jusqu'à température ambiante.

2. Procédé selon la revendication 1 caractérisé en ce que, immédiatement avant l'application de la feuille de colle à fusion, une couche d'une résine synthétique durcissable par réticulation est appliquée sur le tuyau métallique.

3. Procédé selon la revendication 2, caractérisé en ce que l'épaisseur de la couche de résine synthétique durcissable est d'au moins 0,005 mm.

4. Procédé selon les revendications 1 à 3, caractérisé en ce que la résine synthétique durcissable est constituée de résine époxy du type bisphénol A, et qu'elle est chauffée à la température de réaction, avant le placement de la feuille de colle à fusion, par rayonnement à microondes.

5. Procédé selon les revendications 1 à 4, caractérisé en ce que la feuille de colle à fusion a une épaisseur d'au moins 0,005 mm.

6. Procédé selon les revendications 1 à 5 caractérisé en ce que la bande de matière synthétique thermoplastique présente une épaisseur d'au moins 0,3 mm.

7. Procédé selon une ou plusieurs des revendications 1 à 6, caractérisé en ce que la feuille de colle à fusion et la bande de matière synthétique thermoplastique sont chauffés par rayonnement infrarouge.

8. Procédé selon la revendication 1, caractérisé par l'utilisation d'une feuille de colle à fusion pré-extrudée et refroidie, et d'une bande de matière synthétique thermoplastique pré-extrudée et refroidie.